# EUROPEAN PATENT APPLICATION

(11) **EP 4 804 518 A1**
(43) Date of publication of application: **09.09.2026**
(21) Application number: 25161595.1
(22) Date of filing: 04.03.2025
(51) Int. Cl.: H04N 9/31

(54) **PROJECTOR AND PROJECTION METHOD**

(71) Applicant: TriLite Technologies GmbH, 1040 Wien (AT)
(72) Inventor: SCHMID, Gerhard, 3844 Waldkirchen (AT); DISSAUER-EBERL, Christopher, 8043 Graz (AT); MAIER, Franz Josef, 9210 Pörtschach am Wörthersee (AT); DORFMEISTER, Manuel, 1020 Wien (AT); REITTERER, Joerg, 2345 Brunn am Gebirge (AT)
(74) Representative: Weiser Voith Gugler Patentanwälte Partnerschaft

(57) **Abstract**

A projector (1) comprises a light source (8) emitting a light beam (LB) carrying sequences (2ᵢ) of pixels (Pⱼ), a deflector (9) deflecting the emitted light beam to project the pixels of the sequences along a trajectory (5) repetitively running through a Lissajous pattern (6), a buffer (12) buffering the pixels of the sequences and feeding the buffered pixels successively to the light source, and a conversion circuit receiving input images, extracting, from each input image, a respective one of the sequences of pixels to be successively projected along the trajectory and transferring the extracted sequences in successive data packets (19ₘ) to the buffer for buffering, wherein each sequence corresponds to a respective part (20ᵢ) of the trajectory that is either shorter or longer than one run through the Lissajous pattern. A projection method (34) utilises the projector to project pixels.

## Description

The present invention relates to a projector comprising a light source configured to emit a light beam carrying sequences of pixels, a deflector configured to deflect the emitted light beam to project the pixels of the sequences on a projection area pixel-by-pixel along a trajectory which repetitively runs through a Lissajous pattern, a buffer connected to the light source and configured to buffer the pixels of the sequences and to feed, in synchronism with the deflector, the buffered pixels successively to the light source for projecting, and a conversion circuit configured to receive input images each comprised of a matrix of pixels, to extract, from each received input image, a respective one of the sequences of pixels to be successively projected along the trajectory and to transfer the extracted sequences in successive data packets to the buffer for buffering. The invention further relates to a projection method utilising the projector.

Projectors of the above-mentioned kind may, e.g., be used in virtual reality (VR), mixed reality (MR) or augmented reality (AR) glasses, helmets or head-up displays (HUDs) for a broad range of applications like navigation, training, entertainment, education or work. Such projectors are based on a separation of time-critical real-time components like the buffer, the light source and the deflector that need to be tightly synchronised to one another, from the conversion circuit that may only be loosely synchronised to the real-time components.

On the one hand, the conversion circuit is freed from a tight synchronisation and has valuable headroom or "slack" for the tasks of converting each input image, the pixels of which are ordered in the matrix, to one respective sequence, the pixels of which are ordered according to the trajectory, i.e. in the order of projection, and of transferring the pixels in the order of projection to the buffer. The conversion circuit can, hence, be (part of) a commercially available general purpose CPU or GPU. Provided that the sequences of pixels are extracted sufficiently fast so that the buffer is always sufficiently filled for each next feeding, the conversion circuit is free to perform additional tasks, e.g., computation of dynamic brightness or distortion corrections by altering the pixels of the images on-the-fly.

On the other hand, the real-time components are freed from determining the order of the pixels in the sequences according to the trajectory and, hence, tuned for a fast and tightly-synchronised projection of the pixels. The buffer, to which the conversion circuit transfers the sequences of pixels already in the order of projection can retrieve the buffered pixels with a fast sequential contiguous ("linear") buffer access and need not be synchronised each time a new pixel is to be projected but, e.g., only when the projection of several pixels shall be (re-)synchronised to the deflection.

In state of the art projectors, each sequence covers a respective input image, which avoids screen tearing and achieves a predictable steady state projection. Thereby, the frequency of receiving images by the conversion circuit (in the following: "image reception frequency") and the frequency of runs of the trajectory through the Lissajous pattern (in the following: "run frequency") are matched to one another. Thus, on the one hand, the image reception frequency is limited by the maximum run frequency the deflector is capable to provide, limiting the number of input images that can be converted and transferred to the buffer per time interval. On the other hand, the run frequency is limited by the maximum image reception frequency, limiting the number of pixels that can be projected along the trajectory per time interval.

It is an object of the invention to provide a projector and a projection method, which each allow for an improved pixel projection.

In a first aspect of the invention, this object is achieved with a projector as specified at the outset, wherein each sequence corresponds to a respective part of the trajectory that is either shorter or longer than one run through the Lissajous pattern.

The invention breaks with the paradigm to project one full input image after the other by extracting each sequence along one full run of the trajectory through the Lissajous pattern, and thus with the rigid coupling of the image reception frequency and the run frequency. According to the invention, either more than one input image is projected per run of the Lissajous pattern (each part of the trajectory being shorter than one run through the Lissajous pattern) or each input image is projected for more than one run through the Lissajous pattern (each part of the trajectory being longer than one run through the Lissajous pattern). Thus, the image reception frequency and the run frequency become independent from one another and may each be adapted separately, which improves the pixel projection - at the cost of an introduced screen tearing along the Lissajous trajectory. However, compared to the screen tearing along a straight horizontal line in case of a raster pattern projection, this screen tearing is perceived less or not at all by a user when occurring along the Lissajous trajectory as it is distributed over the projection area.

When the conversion circuit extracts each sequence for a part of the trajectory that is shorter than one run through the Lissajous pattern, in which case each input image is used only partly, the number of input images that can be received, converted and transferred to the buffer per time interval can be increased - independently of the run frequency. This facilitates a prompt update of video content, in particular the projection of rapidly changing live content in AR-, MR- or VR-applications.

When the conversion circuit extracts each sequence for a part of the trajectory that is longer than one run through the Lissajous pattern, in which case each input image is used for more than one run through the Lissajous pattern, the run frequency can be increased - independently of the image reception frequency. Thus, more pixels can be projected per time interval increasing the resolution and/or the refresh rate of the projected pixels even when the video content changes slowly.

The conversion circuit may distribute the extracted sequences in any partition over said data packets for transferring. In one example, each data packet comprises the pixels of more than one sequence to reduce the number of transmissions and the computational load required therefor. In another example, each data packet contains one respective sequence to balance the latency for projecting updated video content, on the one hand, and the required number of transmissions, computational load and buffer size, on the other hand. Advantageously, the pixels of each extracted sequence are distributed over more than one data packet, which allows to provide the most recent video content fast in several small data packets per sequence and to use a particularly small and fast buffer.

In a favourable embodiment, each data packet comprises pixel lines and one or more synchronisation lines and the pixels extracted along a trajectory section extending from one turning point of the Lissajous pattern to an opposite turning point of the Lissajous pattern are distributed over more than one pixel line. A data packet format with pixel lines and synchronisation lines (also called "blank lines") is often used to synchronise the start/end of one full image and to ease hardware compatibility, for instance when data packets are embodied as standardised "frames", e.g., according to the Mobile Industry Processor Interface Alliance (MIPI) standard, in particular the Display Serial Interface (DSI) standard, according to the High Definition Multimedia Interface (HDMI) standard, according to the DisplayPort (DP) standard, according to the Serial Digital Interface (SDI) standard, or the like. Arranging the pixels along a trajectory section extending from one turning point of the Lissajous pattern to an opposite turning point of the Lissajous pattern in several short pixel lines also shortens the synchronisation lines and, thus, requires less buffer storage. Consequently, a small and fast buffer can be used.

With regard to the aforementioned short parts, it is particularly beneficial when each part of the trajectory is shorter than three quarters, e.g. shorter than a half, in particular shorter than a quarter, of one run through the Lissajous pattern. In this way, at least four thirds more images may be projected - albeit each one only partly - per time interval allowing for a high image reception frequency and, thus, a fast update of video content.

With regard to the aforementioned long parts, it is particularly beneficial when each part of the trajectory is longer than one and a quarter, e.g. longer than one and a half, in particular longer than two, runs through the Lissajous pattern. In this way, each image is projected at least 1.25 times which allows to increase the run frequency by at least one quarter to obtain a high pixel refresh rate and/or resolution.

The lengths of the parts of the trajectory can be chosen statically or dynamically, e.g. anticipatory for several subsequent received images or for each image separately. Preferably, the conversion circuit is configured to adjust the lengths of the parts of the trajectory to the image reception frequency. Thereby, the conversion circuit can dynamically extract the sequences along shorter parts when receiving the input images at a higher image reception frequency and along longer parts when receiving the input images at a lower image reception frequency to always extract pixels from the most recent input image. Particularly preferably, the conversion circuit is configured to receive the run frequency and each part has a length of substantially m runs through the Lissajous pattern, m being the run frequency divided by the image reception frequency. Thereby, exactly those pixels of each input image that can actually be projected are extracted and transferred by the conversion circuit and processed by the buffer.

In an advantageous embodiment, the projector further comprises an image generator configured to determine a speed of change of the orientation or position of the projector, of a user's gaze, of a user's head and/or of an object in a viewed scene, and to generate and send to the conversion circuit said input images in dependence on the determined speed of change. In this embodiment, which is particularly suited for said AR-, MR-, or VR-applications, the image generator may generate and send and the conversion circuit receive more images per time interval when the respective change occurs at a higher speed for a prompt adaptation of the projection to the user's current view and less images per time interval when the respective change occurs at a lower speed to save computational load for the converting and transferring.

In a second aspect, the invention provides a projection method comprising:
by a conversion circuit, receiving input images each comprised of a matrix of pixels, extracting, from each received input image, one respective sequence of pixels to be successively projected along a trajectory which repetitively runs through a Lissajous pattern on a projection area, and transferring the extracted sequences in successive data packets to a buffer for buffering;
by the buffer, buffering the pixels of the transferred data packets and feeding, in synchronism with a deflector, the buffered pixels successively to a light source;
by the light source, emitting a light beam carrying the pixels fed by the buffer;
by the deflector, deflecting the emitted light beam to project the pixels carried by the light beam on said projection area pixel-by-pixel along the trajectory which repetitively runs through the Lissajous pattern;
wherein each sequence corresponds to a respective part of the trajectory that is either shorter or longer than one run through the Lissajous pattern.

The projection method utilises the above-mentioned projector. To this end, the projection method may make use of any of the above-mentioned embodiments of the projector to achieve the above-mentioned advantages.

The invention will now be described by means of exemplary embodiments thereof with reference to the enclosed drawings, in which show:
Fig. 1 a projector according to the invention in the process of projecting pixels, in a schematic diagram;
Figs. 2 and 3 a conversion circuit converting input images partly (Fig. 2) or repeatedly (Fig. 3), a buffer, a light source and a deflector of the projector of Fig. 1, in a schematic circuit diagram;
Fig. 4 an exemplary extraction of a sequence of pixels from an input image into a data packet that is transferred from the conversion circuit to the buffer of Fig. 2 or 3, in a schematic diagram;
Fig. 5 a method according to the invention that may be carried out by the projector of Figs. 1 - 3, in a flow diagram.

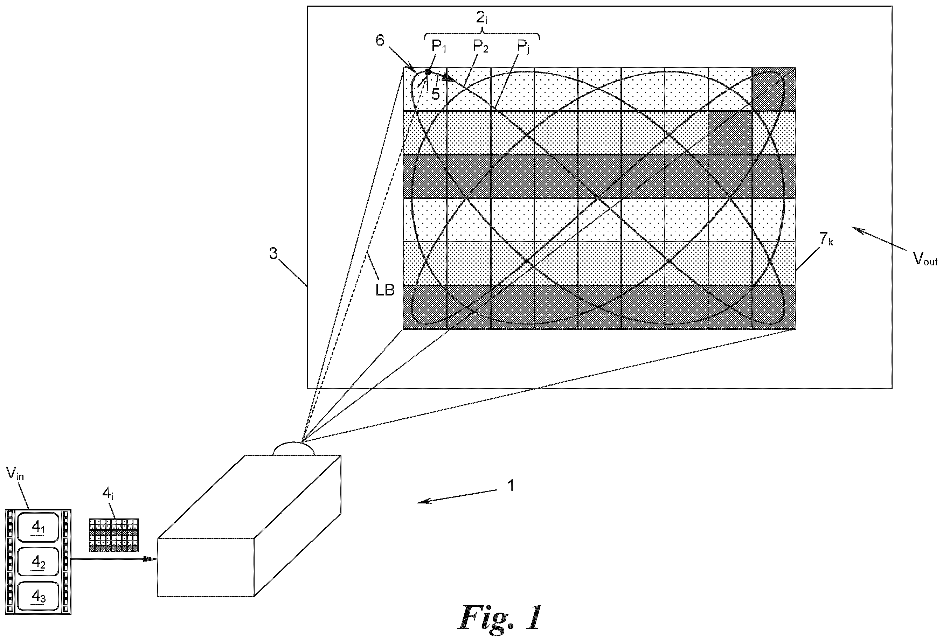

Fig. 1 shows a projector 1 projecting sequences 2₁, 2₂, ..., generally 2ᵢ, of pixels P₁, P₂, ..., generally Pⱼ, onto a projection area 3. The pixels Pⱼ of each sequence 2ᵢ stem from one respective input image 4₁, 4₂, ..., generally 4ᵢ, of an input video stream Vᵢₙ. To do so, the projector 1 scans the projection area 3 with a pulsed or continuous light beam LB carrying the sequences 2ᵢ of pixels Pⱼ along a trajectory 5 that repetitively runs through a Lissajous pattern 6 to project the pixels Pⱼ, one after the other, along the trajectory 5. Within each run through the Lissajous pattern 6, the projected pixels Pⱼ form one output image 7₁, 7₂, ..., generally 7ₖ, of an output video stream Vₒᵤₜ. The projector 1 receives the input images 4ᵢ at a constant or variable image reception frequency fᵢᵣ and projects the output images 7ₖ at a constant or variable run frequency fᵣ which indicates the number of runs of the trajectory 5 through the Lissajous pattern 6 per time interval.

The input and output images 4ᵢ, 7ₖ may optionally have a pixel resolution according to a conventional image or video standard, e.g., full HD (1920 x 1080 pixels), UHD (3840 x 2160 pixels), 4K (4096 x 2160 pixels) etc. and the Lissajous pattern 6 may be dense. However, for illustrational purposes only few pixels Pⱼ per image and a simple, coarse Lissajous pattern 6 are shown in Fig. 1.

In case the projector 1 projects monochrome, black and white, or grey scale output images 7ₖ with a monochrome light beam LB, each pixel Pⱼ comprises a single colour value, e.g., a brightness or intensity value, and in case the projector 1 projects polychrome output images 7ₖ with a polychrome light beam LB, each pixel Pⱼ comprises several colour values, e.g., RGB values indicating the brightness or intensity of a red, green, and blue colour, YPbPr values, etc.

Depending on the application, the projection area 3 may be a wall, a board, a projection screen, a poster, the retina of an eye, a combiner of augmented reality (AR) glasses, in particular a holographic, freeform or waveguide combiner, or the like. Accordingly, the projector 1 may be part of any display apparatus, in particular of AR, MR (mixed reality) or VR (virtual reality) glasses, a helmet, a head-up display, etc.

As shown in Figs. 1 - 3, the projector 1 has a light source 8 emitting the light beam LB and a deflector 9 deflecting the emitted light beam LB towards the projection area 3 to project the pixels Pⱼ carried by the light beam LB on the projection area 3 along the trajectory 5.

The light source 8 has a light source driver 10 which drives a light emitter 11 according to the pixels Pⱼ of the sequences 2ᵢ fed sequentially to the light source driver 10 by a buffer 12. The light emitter 11 may be any emitter known in the art, an incandescent lamp, a gas, liquid or solid laser, a light emitting diode (LED), a microLED (µLED), a superlumines-cent light emitting diode (SLED), a laser diode, for instance an edge-emitting laser diode or surface-emitting laser diode, etc.

The deflector 9 may be any device for deflecting the light beam LB towards the projection area 3 along the trajectory 5 and optionally includes or is formed by, e.g., one or more moveable mirrors and/or prisms, acousto-optic, electro-optic, magneto-optic elements, etc. as known in the art. In the embodiment shown, the deflector 9 is formed by a mirror assembly 13 with one or more (here: one) micro-electro-mechanical-system, MEMS, mirrors 14 which is driven by a mirror driver 15 to oscillate about a horizontal axis 16 with a horizontal oscillation period Tₕ and about a vertical axis 17 with a vertical oscillation period Tᵥ, in order to deflect the emitted light beam LB towards the projection area 3 along said trajectory 5. As the oscillation of the MEMS mirror 14 determines the trajectory 5, the oscillation and, thus, the deflection are carried out according to said Lissajous pattern 6.

The mirror assembly 13 either comprises one (here: MEMS) mirror 14 oscillating about the horizontal and vertical axes 16, 17 or two (here: MEMS) mirrors 14, one after the other in the optical path of the light beam LB, each of which MEMS mirrors 14 then oscillating about a different one of the horizontal and vertical axes 16, 17. For a fast and energy efficient oscillation, the MEMS mirror/s 14 optionally oscillate/s resonantly.

The horizontal and vertical oscillation periods Tₕ, Tᵥ are chosen such that the trajectory 5 of the light beam LB on the projection area 3 densely covers the output image 7ₖ during the period Tᵣ = 1/fᵣ of one run of the trajectory 5 through the Lissajous pattern 6. Such a "complex" or "dense" Lissajous pattern 6 can be achieved when the frequencies fₕ = 1/Tₕ, fᵥ = 1/Tᵥ have a small greatest common divisor, e.g. smaller than 10. In contrast to a raster scan pattern, the Lissajous pattern 6 is formed by two, three, four or more horizontal oscillations and two, three, four or more vertical oscillations per run therethrough.

The buffer 12 buffers the pixels Pⱼ of the sequences 2ᵢ in that order in which they are to be projected along the trajectory 5 one after the other. Depending on the size of the buffer 12, the buffer 12 may simultaneously buffer the pixels Pᵢ of one full sequence 2ᵢ, of less than one full sequence 2ᵢ or of more than one full sequence 2ᵢ. The buffer 12 feeds the buffered pixels Pⱼ successively to the light source driver 10 in synchronism with the deflector 9, e.g. by means of an internal buffer controller. In one example, the buffer 12 feeds a batch of one or more pixels Pⱼ each time a synchronisation or trigger signal trg is received from the deflector 9. In another example, the buffer 12 feeds a batch of one or more pixels Pⱼ successively according to an internal clock which may optionally be re-synchronised with the frequencies fₕ, fᵥ of the deflector 9 from time to time upon receiving the synchronisation signal trg. The buffer 12, the light source 8 and the deflector 9 are, thus, tightly synchronised and form the time-critical real-time part of the projector 1.

To supply the buffer 12 with the pixels Pⱼ of the sequences 2ᵢ in the order of projection, the projector 1 has a conversion circuit 18 which converts each input image 4ᵢ, the pixels Pⱼ of which are ordered in a matrix of rows and columns and not according to the trajectory 5, to a respective one of the sequences 2ᵢ, the pixels Pⱼ of which are ordered according to the trajectory 5. The conversion circuit 18 transfers the extracted sequences 2ᵢ in successive data packets 19₁, 19₂, ..., generally 19ₘ, to the buffer 12 for buffering. To this end, the conversion circuit 18 may be any electric circuit known in the art that is capable to perform the tasks described herein and include, be formed by, or be part of an application specific integrated circuit (ASIC), a field-programmable gate array (FPGA), etc. and/or a central processing unit (CPU) or a graphical processing unit (GPU) or the like executing a respective software.

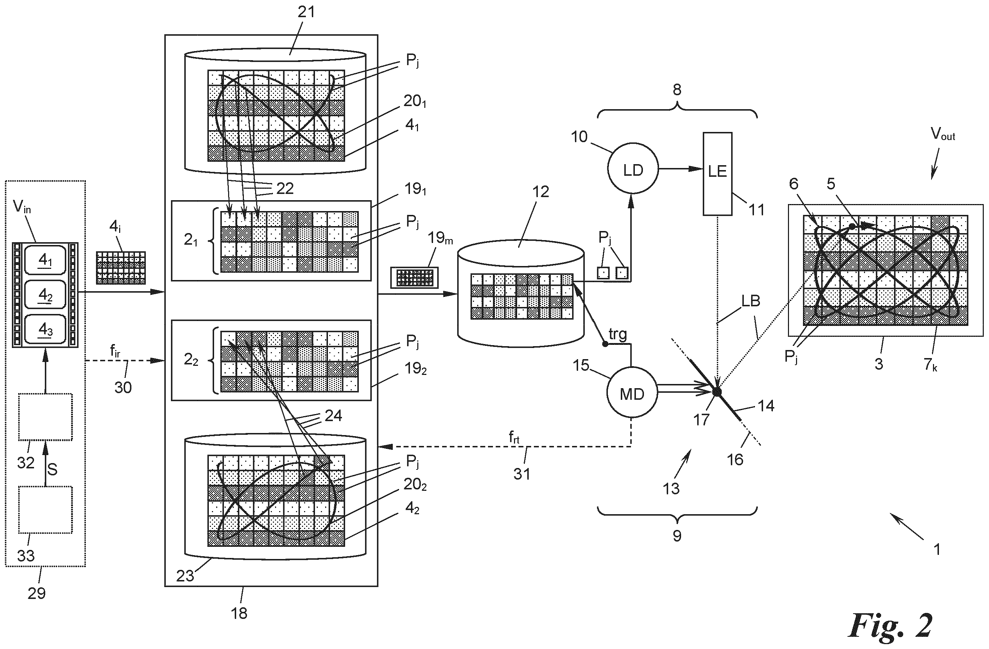

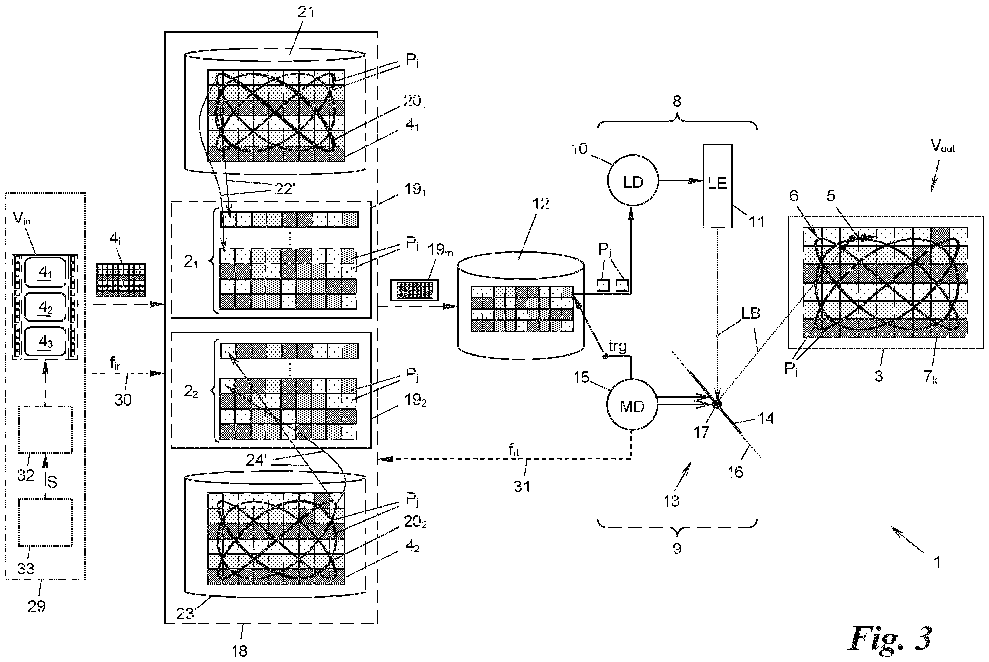

The conversion circuit 18 extracts each sequence 2ᵢ for a respective part 20ᵢ of the trajectory 5 that is either shorter (Fig. 2) or longer (Fig. 3) than one run through the Lissajous pattern 6. Thus, there is no one-to-one correspondence between input images 4ᵢ and output images 7ₖ; in particular, each sequence 2ᵢ may be extracted and each input image 4ᵢ be projected for a fraction or an integer or non-integer multiple of runs through the Lissajous pattern 6. One input image 4ᵢ forms only a part of a respective output image 7ₖ when the respective part 20ᵢ is shorter than one run through the Lissajous pattern 6 and one input image 4ᵢ forms part of two or more output images 7ₖ when the respective part 20ᵢ is longer than one run through the Lissajous pattern 6. Consequently, the image reception frequency fᵢᵣ and the run frequency fᵣ are independent from one another. Hence, the deflector 9 may - independently of the image reception frequency fᵢᵣ - deflect the light beam LB in its fastest or most energy efficient manner, e.g., by keeping the MEMS mirror/s 14 oscillating at resonance.

In the example of Fig. 2, the conversion circuit 18 receives the input images 4ᵢ at an image reception frequency fᵢᵣ that is twice the run frequency fᵣ. The conversion circuit 18 receives the first input image 4₁, stores the first input image 4₁ in a first memory 21 and extracts the first sequence 2₁ of those pixels Pⱼ from the first input image 4₁ that are to be projected along a first part 20₁ of the trajectory 5 that spans one half of a run through the Lissajous pattern 6. The extraction is indicated for the first three pixels Pⱼ by correspondence arrows 22.

By the extraction, the conversion circuit 18 forms the first data packet 19₁ containing the first sequence 2₁ and then transfers the first data packet 19₁ to the buffer 12 for buffering. While converting the first input image 4₁ or thereafter, the conversion circuit 18 receives the second input image 4₂, stores the second input image 4₂ in a second memory 23 and extracts the second sequence 2₂ of those pixels Pⱼ from the second input image 4₂ that are to be projected along a second part 20₂ of the trajectory 5 that spans the other half of the run through the Lissajous pattern 6. Similar as before, the extraction is indicated for the first three pixels Pⱼ by correspondence arrows 24. The conversion circuit 18 forms the second data packet 19₂ containing the second sequence 2₂ and transfers the second data packet 19₂ to the buffer 12 for buffering.

Hence, the first half of the first output image 7₁ that is projected during the first run of the trajectory 5 through the Lissajous pattern 6 is comprised of pixels Pⱼ of the first input image 4₁ and the second half of the first output image 7₁ is comprised of pixels Pⱼ of the second input image 4₂. Consequently, an update of the video content (cf. the updated second to last pixel Pⱼ in the first row and the third to last pixel in the second row of the second input image 4₂) is projected at the image reception frequency fᵢᵣ, which in the example of Fig. 2 is faster than the run frequency fᵣ, and, thus, at low latency.

In the alternative example of Fig. 3, the conversion circuit 18 receives the input images 4ᵢ at an image reception frequency fᵢᵣ that is two thirds of the run frequency fᵣ. The conversion circuit 18 receives the first input image 4₁, stores the first input image 4₁ in the first memory 21 and extracts the first sequence 2₁ of those pixels Pⱼ from the first input image 4₁ that are to be projected along a first part 20₁ of the trajectory 5 that spans one and a half runs through the Lissajous pattern 6. In Fig. 3, those segments of the trajectory 5 that are run through twice are indicated with an increased line thickness in the part 20₁ for better visibility and the twofold extraction of the top-left pixel Pⱼ is indicated by the correspondence arrows 22'.

By the extraction, the conversion circuit 18 forms the first data packet 19₁ containing the first sequence 2₁ and transfers the first data packet 19₁ to the buffer 12 for buffering. While converting the first input image 4₁ or thereafter, the conversion circuit 18 receives the second input image 4₂, stores the second input image 4₂ in the second memory 23 and extracts the second sequence 2₂ of those pixels Pⱼ from the second input image 4₂ that are to be projected along a second part 20₂ of the trajectory 5 that spans another one and a half runs through the Lissajous pattern 6. Again, those segments of the trajectory 5 that are run through twice are indicated with an increased line thickness in the part 20₂ and the twofold extraction of the top-right pixel Pⱼ is indicated by the correspondence arrows 24'. The conversion circuit 18 forms the second data packet 19₂ containing the second sequence 2₂ and transfers the second data packet 19₂ to the buffer 12 for buffering.

Hence, the pixels Pⱼ of the first input image 4₁ are projected in the first output image 7₁ and in one half of the second output image 7₂ during the first one and a half runs of the trajectory 5 through the Lissajous pattern 6, and the pixels Pⱼ of the second input image 4₂ are projected in one half of second output image 7₂ and in the third output image 7₃ during the second one and a half runs of the trajectory 5 through the Lissajous pattern 6. Consequently, the pixels Pⱼ of the output image 7ₖ are refreshed at the run frequency fᵣ, which in the example of Fig. 3 is faster than the image reception frequency fᵢᵣ, and, thus, with low flickering.

The conversions of Figs. 2 and 3 may be continued for further input images 4₃, 4₄, ..., which may be stored alternatingly in the first and second memories 21, 23. Instead of the two memories 21, 23 shown, the conversion circuit 18 may comprise only one memory which is overwritten upon receiving a new image 4ᵢ or more than two memories.

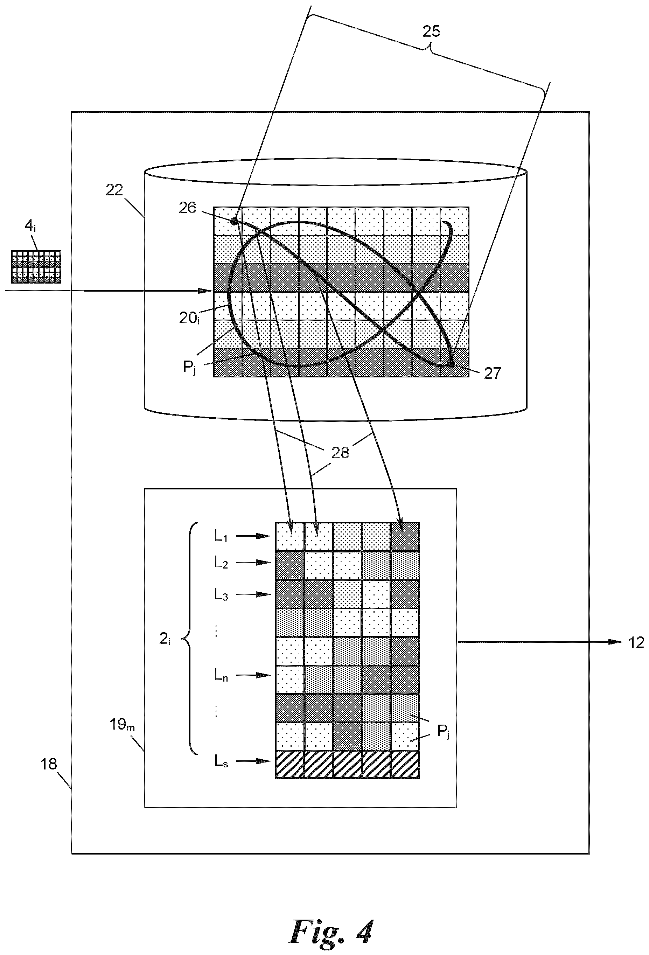

With reference to Fig. 4, the data packets 19ₘ, the partitioning of the sequences 2ᵢ into the data packets 19ₘ and the transferring of the data packets 19ₘ to the buffer 12 shall be described in detail.

Generally, a data packet 19ₘ may be any data structure holding one, two, three or more pixels Pᵢ. Optionally, the data packets 19ₘ are embodied as standardised frames, e.g., according to the Mobile Industry Processor Interface Alliance (MIPI) standard, in particular the Display Serial Interface (DSI) standard, according to the High Definition Multimedia Interface (HDMI) standard, according to the DisplayPort (DP) standard, etc. for hardware compatibility reasons. For instance, as shown in Fig. 4, each data packet 19ₘ optionally holds the pixels Pⱼ in the order of extraction in successive pixel lines L₁, L₂, ..., generally Lₙ, and includes one or more synchronisation lines Lₛ. Such a standard frame format is typically utilised for matrix images, in which each pixel line Lₙ holds one row of pixels of the matrix image. This format may be adapted for the sequences 2ᵢ which do not represent a matrix pixel order but a Lissajous pixel order.

In the example of Fig. 4, pixels Pⱼ extracted along a trajectory section 25 extending from one turning point 26 of the Lissajous pattern 6 to an opposite turning point 27 of the Lissajous pattern 6 are arranged in more than one pixel line Lₙ. The pixels Pⱼ of the first pixel line L₁ have been extracted along less than one half of one sweep from left to right (see arrows 28) and the pixels Pⱼ extracted for one whole sweep from left to right are arranged in the first three pixel lines L₁, L₂, L₃ in this example. Thus, the pixel lines Lₙ are short and so are the one or more synchronisation lines Lₛ, saving valuable storage in the buffer 12.

The sequences 2ᵢ may be distributed over the data packets 19ₘ in different ways. In the example of Fig. 4, each data packet 19ₘ contains a full respective sequence 2ᵢ. Alternatively, each data packet 19ₘ may contain only a part of one respective sequence 2ᵢ, e.g. when using a smaller buffer 12, or two or more respective sequences 2ᵢ, e.g. when using a larger buffer 12. Accordingly, the data packets 19ₘ may be transferred to the buffer 12 at any timing as long as the buffer 12 is always sufficiently filled, in particular at the image reception frequency fᵢᵣ, faster in smaller data packets 19ₘ, or slower in larger data packets 19ₘ.

Optionally, the transfer of a new data packet 19ₘ may be triggered by the deflector 9 in synchronism with its movement, by the buffer 12 in dependence on its filling level, each time a predetermined time interval has lapsed, e.g., every n-th cycle of a clock of the conversion circuit 18, etc.

Returning to Figs. 2 and 3, the lengths of the parts 20ᵢ of the trajectory 5 can be determined statically or dynamically, e.g. anticipatory for several subsequent received input images 4ᵢ or for each received input image 4ᵢ separately.

For instance, when extracting the sequences 2ᵢ along short parts 20ᵢ (Fig. 2), each part 20ᵢ may be shorter than three quarters of one run, shorter than a half of one run or shorter than a quarter of one run through the Lissajous pattern 6. When extracting the sequences 2ᵢ along long parts 20ᵢ (Fig. 3), each part 20ᵢ may be longer than one and a quarter runs, longer than one and a half runs or longer than two runs through the Lissajous pattern 6.

In one embodiment, the conversion circuit 18 adjusts the lengths of the parts 20ᵢ dynamically to the image reception frequency fᵢᵣ. The image reception frequency fᵢᵣ may either be determined by the conversion circuit 18 or provided to the conversion circuit 18, e.g. from an image generator 29 as indicated by the dashed arrow 30 in Figs. 2 and 3. The conversion circuit 18 extracts the sequences 2ᵢ along shorter parts 20ᵢ when the image reception frequency fᵢᵣ is higher and along longer parts 20ᵢ when the image reception frequency fᵢᵣ is lower in this example. To this end, the conversion circuit 18 may, e.g., switch between the memories 21, 23 deterministically at the image reception frequency fᵢᵣ or each time a new image 4ᵢ is received. In one variant of this embodiment, the conversion circuit 18 receives the run frequency fᵣ, e.g. from the deflector 9 as indicated by the dashed arrow 31, and extracts the sequences 2ᵢ along respective parts 20ᵢ which each have a length of m runs, wherein m is the run frequency fᵣ divided by the image reception frequency fᵢᵣ, i.e. m = fᵣ / fᵢᵣ.

The input images 4ᵢ may be generated externally outside the projector 1 or by the projector 1 itself, e.g. by its optional image generator 29 shown in Figs. 2 and 3. The image generator 29 may generate the input images 4ᵢ in different ways, in particular by filming, by retrieving from a storage, or by computing with a computing unit 32 which simulates or augments an environment for AR-, MR- or VR-applications. Optionally, the image generator 29 adapts the frequency of generating and sending input images 4ᵢ to a speed of change S of a user's view or of a viewed scene. In this case, a sensor 33 of the image generator 29 determines the speed of change S of the orientation or position of the projector 1 (when carried on a user's head), of the orientation or position of a user's gaze, of the orientation or position of a user's head, and/or of the orientation or position of an object in the viewed scene and communicates the determined speed of change S to the computing unit 32. The computing unit 32, in turn, generates and sends to the conversion circuit 18 more input images 4ᵢ per time interval (at a higher image reception frequency fᵢᵣ) when the determined speed of change S is higher and less input images 4ᵢ per time interval (at a lower image reception frequency fᵢᵣ) when the determined speed of change S is lower.

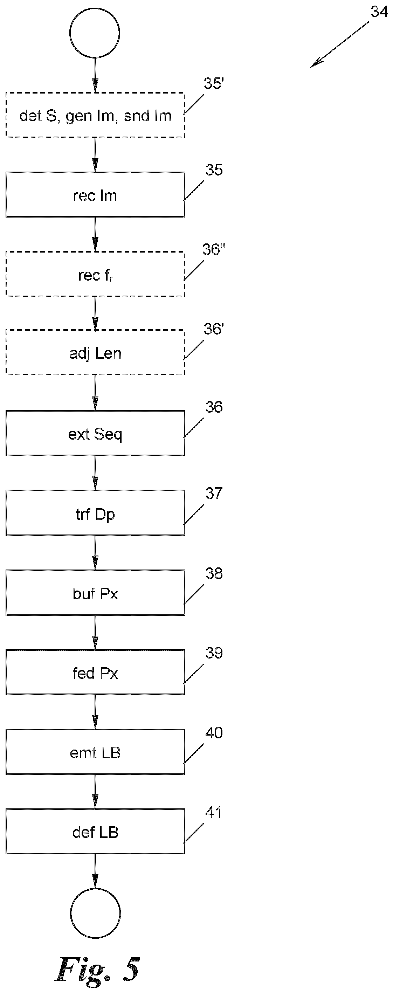

With reference to Fig. 5, a projection method 34 which may be carried out by the above-mentioned projector 1 shall be exemplified. The projection method 34 may utilise the respective embodiments and variants and their options and functions described with reference to the projector 1 and vice-versa.

In a first step 35 of the projection method 34, the conversion circuit 18 receives the input images 4ᵢ, wherein each input image 4ᵢ is comprised of the matrix of pixels Pⱼ. The input images 4ᵢ may be pre-generated or be generated as part of the projection method 34 in an optional preliminary phase 35' by the optional image generator 29. In a variant of the preliminary phase 35', the image generator 29 determines the speed of change S as described above and generates and sends the input images 4ᵢ to the conversion circuit 18 in dependence on the determined speed of change S as described above.

In a second step 36 of the projection method 34, the conversion circuit 18 extracts, from each received input image 4ᵢ, one respective sequence 2ᵢ of pixels Pⱼ to be successively projected along the trajectory 5 which repetitively runs through the Lissajous pattern 6 on the projection area 3. Thereby, each sequence 2ᵢ corresponds to a respective part 20ᵢ of the trajectory 5 that is either shorter (Fig. 2) or longer (Fig. 3) than one run through the Lissajous pattern 6 as exemplified with reference to Figs. 2 and 3 above. The conversion circuit 18 may adjust the lengths of the parts 20ᵢ to the image reception frequency fᵢᵣ in an optional step 36'. For instance, the conversion circuit 18 may receive the run frequency fᵣ in a further optional step 36" and adjust the length of each part 20ᵢ to be substantially m runs through the Lissajous pattern 6 in step 36', m being the run frequency fᵣ divided by the image reception frequency fᵢᵣ and "substantially" meaning m ± 10%.

In a third step 37 of the projection method 34, the conversion circuit 18 transfers the extracted sequences 2ᵢ in successive data packets 19ₘ to the buffer 12 for buffering. Each data packet 19ₘ may contain only a part of one respective sequence 2ᵢ, a full respective sequence 2ᵢ or pixels Pⱼ of more than one sequence 2ᵢ.

In a fourth step 38 of the projection method 34, the buffer 12 buffers the pixels Pⱼ of the transferred data packets 19ₘ. Depending on its buffer size and the size of the data packets 19ₘ, the buffer 12 may simultaneously buffer one, two, three or more data packets 19ₘ at once.

In a fifth step 39 of the projection method 34, the buffer 12 feeds the buffered pixels Pⱼ, i.e. the pixels Pⱼ of the extracted sequences 2ᵢ, in synchronism with the deflector 9 successively to the light source 8.

In a sixth step 40 of the projection method 34, the light source 8 emits the light beam LB carrying the pixels Pⱼ fed by the buffer 12, i.e. the pixels Pⱼ of the sequences 2ᵢ.

In a seventh step 41, the deflector 9 deflects the emitted light beam LB to project the pixels Pⱼ carried by the light beam LB, i.e. the pixels Pⱼ of the sequences 2ᵢ, on the projection area 3 pixel-by-pixel along the trajectory 5 repetitively running through the Lissajous pattern 6.

At least some of steps 35 - 41 (and any of the optional steps 35', 36' and 36", if present) may and typically will be carried out in parallel and/or in a time-overlapping manner for several input images 4ᵢ and/or for one and the same input image 4ᵢ. For instance, at the same time, pixels Pⱼ of the sequence 2₁ of a first input image 4₁ may be buffered and fed to the light source 8 for projecting (steps 38 - 41), the sequence 2₂ of a second input image 4₂ may be transferred to the buffer 12 (step 37), the sequence 2₃ of a third input image 4₃ may be extracted (step 36) and a fourth input image 4₄ may be received (step 35). Similarly, at the same time, for one and the same input image 4ᵢ, pixels Pⱼ of the respective sequence 2ᵢ may be buffered and fed to the light source 8 for projecting (steps 38 - 41), other pixels Pⱼ of the respective sequence 2ᵢ be transferred to the buffer 12 (step 37), yet other pixels Pⱼ of the respective sequence 2ᵢ be extracted (step 36) and still other pixels Pⱼ be received (step 35).

The invention is not restricted to the specific embodiments described above but encompasses all variants, modifications and combinations thereof that fall within the scope of the appended claims.

## Claims

1. Projector (1), comprising
a light source (8) configured to emit a light beam (LB) carrying sequences (2ᵢ) of pixels (Pⱼ);
a deflector (9) configured to deflect the emitted light beam (LB) to project the pixels (Pⱼ) of the sequences (2ᵢ) on a projection area (3) pixel-by-pixel along a trajectory (5) which repetitively runs through a Lissajous pattern (6);
a buffer (12) connected to the light source (8) and configured to buffer the pixels (Pⱼ) of the sequences (2ᵢ) and to feed, in synchronism with the deflector (9), the buffered pixels (Pⱼ) successively to the light source (8) for projecting; and
a conversion circuit (18) configured to receive input images (4ᵢ) each comprised of a matrix of pixels (Pj), to extract, from each received input image (4ᵢ), a respective one of the sequences (2ᵢ) of pixels (Pⱼ) to be successively projected along the trajectory (5) and to transfer the extracted sequences (2ᵢ) in successive data packets (19ₘ) to the buffer (12) for buffering;
**characterised in that** each sequence (2ᵢ) corresponds to a respective part (20ᵢ) of the trajectory (5) that is either shorter or longer than one run through the Lissajous pattern (6).

2. Projector according to claim 1, wherein the pixels (Pⱼ) of each extracted sequence (2ᵢ) are distributed over more than one data packet (19ₘ).

3. Projector according to claim 1 or 2, wherein each data packet (19ₘ) comprises pixel lines (Lₙ) and one or more synchronisation lines (Lₛ) and wherein the pixels (Pⱼ) extracted along a trajectory section (28) extending from one turning point (29) of the Lissajous pattern (6) to an opposite turning point (30) of the Lissajous pattern (6) are distributed over more than one pixel line (Lₙ).

4. Projector according to any one of claims 1 to 3, wherein each part (20ᵢ) of the trajectory (5) is shorter than three quarters, preferably shorter than a half, particularly preferably shorter than a quarter, of one run through the Lissajous pattern (6).

5. Projector according to any one of claims 1 to 3, wherein each part (20ᵢ) of the trajectory (5) is longer than one and a quarter, preferably longer than one and a half, particularly preferably longer than two, runs through the Lissajous pattern (6).

6. Projector according to any one of claims 1 to 5, wherein the conversion circuit (18) is configured to adjust the lengths of the parts (20ᵢ) of the trajectory (5) to an image reception frequency (fᵢᵣ).

7. Projector according to claim 6, wherein the conversion circuit (18) is configured to receive a run frequency (fᵣ) indicating a frequency of runs of the trajectory (5) through the Lissajous pattern (6), and wherein each part (20ᵢ) has a length of substantially m runs through the Lissajous pattern (6), m being the run frequency (fᵣ) divided by the image reception frequency (fᵢᵣ).

8. Projector according to any one of claims 1 to 7, further comprising an image generator (29) configured to determine a speed of change (S) of the orientation or position of the projector (1), of a user's gaze, of a user's head and/or of an object in a viewed scene, and to generate and send to the conversion circuit (18) said input images (4ᵢ) in dependence on the determined speed of change (S).

9. Projection method (34), comprising:
by a conversion circuit (18), receiving (35) input images (4ᵢ) each comprised of a matrix of pixels (Pj), extracting (36), from each received input image (4ᵢ), one respective sequence (2ᵢ) of pixels (Pⱼ) to be successively projected along a trajectory (5) which repetitively runs through a Lissajous pattern (6) on a projection area (3), and transferring (37) the extracted sequences (2ᵢ) in successive data packets (19ₘ) to a buffer (12) for buffering;
by the buffer (12), buffering (38) the pixels (Pⱼ) of the transferred data packets (19ₘ) and feeding (39), in synchronism with a deflector (9), the buffered pixels (Pⱼ) successively to a light source (8);
by the light source (8), emitting (40) a light beam (LB) carrying the pixels (Pⱼ) fed by the buffer (12);
by the deflector (9), deflecting (41) the emitted light beam (LB) to project the pixels (Pⱼ) carried by the light beam (LB) on said projection area (3) pixel-by-pixel along the trajectory (5) which repetitively runs through the Lissajous pattern (6),
**characterised in that** each sequence (2ᵢ) corresponds to a respective part (20ᵢ) of the trajectory (5) that is either shorter or longer than one run through the Lissajous pattern (6).

10. Projection method according to claim 9, wherein the pixels (Pⱼ) of each extracted sequence (2ᵢ) are distributed over more than one data packet (19ₘ).

11. Projection method according to claim 9 or 10, wherein each part (20ᵢ) of the trajectory (5) is shorter than three quarters, preferably shorter than a half, particularly preferably shorter than a quarter, of one run through the Lissajous pattern (6).

12. Projection method according to claim 9 or 10, wherein each part (20ᵢ) of the trajectory (5) is longer than one and a quarter, preferably longer than one and a half, particularly preferably longer than two, runs through the Lissajous pattern (6).

13. Projection method according to any one of claims 9 to 12, comprising, by the conversion circuit (18), adjusting (36') the lengths of the parts (20ᵢ) of the trajectory (5) to the image reception frequency (fᵢᵣ).

14. Projection method according to claim 13, comprising, by, the conversion circuit (18), receiving (36") a run frequency (fᵣ) indicating a frequency of runs of the trajectory (5) through the Lissajous pattern (6), and wherein, in said adjusting (36'), each part (20ᵢ) is adjusted (36') to have a length of substantially m runs through the Lissajous pattern (5), m being the run frequency (fᵣ) divided by the image reception frequency (fᵢᵣ).

15. Projection method according to any one of claims 9 to 14, further comprising, by an image generator (29), determining (35') a speed of change (S) of the orientation or position of a projector (1) comprising said conversion circuit (18), said buffer (12), said light source (8) and said deflector (9), of a user's gaze, of a user's head and/or of an object in a viewed scene, and generating and sending (35') to the conversion circuit (18) said input images (4ᵢ) in dependence on the determined speed of change (S).
